# EUROPEAN PATENT SPECIFICATION

(11) **EP 3 257 422 B1**
(45) Date of publication and mention of the grant of the patent: **13.04.2022**
(21) Application number: 16175065.8
(22) Date of filing: 17.06.2016
(51) Int. Cl.: A47L 15/24, A47L 15/42, A47L 15/48

(54) **DISHWASHING MACHINE**
GESCHIRRSPÜLMASCHINE
LAVE-VAISSELLE

(43) Date of publication of application: 20.12.2017
(73) Proprietor: Electrolux Professional S.p.A., 33170 Pordenone (IT)
(72) Inventor: CESCOT, Paolo, 33080 Porcia (PN) (IT); ASQUINI, Antonio, 33170 Pordenone (IT); SALTON, Fabrizio, 33170 Pordenone (IT); VIGNOCCHI, Massimiliano, 33170 Pordenone (IT)
(74) Representative: AWA Sweden AB

(56) References cited:
- WO-A1-2005/070274
- DE-A1- 3 214 216
- DE-A1- 19 707 287
- DE-A1-102007 050 533
- DE-A1-102011 083 179

## Description

### Field of the invention

The present invention relates to a dishwashing machine of the type comprising a washing unit, a rinsing unit and a heat pump circuit for heating water to be used in said washing unit and/or in said rinsing unit.

### Background of the invention

Typically, industrial dishwashing machines, such as the one used in restaurants and canteens, are formed by different interconnected modules into which the different operations required for treating dishware are individually performed.

In typical designs, the dishwashing machines comprises at least a washing module (called also washing unit) and a rinsing module (called also rinsing unit).

Dishware is moved along a tunnel defined in said modules by means of a conveyer member, so that the different phases of dishware treatment can be formed.

In this manner it is possible to produce modular dishwashing machines, i.e. dishwashing machines in which the number of modules is selected according to the specific needs and to the required washing capability.

In order to recover at least part of the heat associated to the vapour produced during washing and rinsing processes, several solutions have been developed in the art.

One of these solutions is based on the use of a condensing unit capturing the vapour inside the washing module and condensing it by fresh water coming from external water mains and directed to a rinse boiler. In this manner, the temperature of incoming water is increased before entering the boiler, thus recovering part of the heat that would be otherwise wasted through the vapour.

A further improvement is represented by the use of a heat pump system coupled with the condensing unit.

In this case, the evaporator of the heat pump system is used in order to increase the condensing effect of the condensing unit and increase the temperature of water entering in the boiler.

DE102007050533 discloses an appliance having a fluid tank for storing a cleaning fluid, and a suction-extraction device for suction-extracting moist air from a cleaning chamber. A heat recovery device is configured to extract heat from the moist air, and has a Peltier element with a heat-absorption side and a waste-heat side. The waste-heat side is in thermal contact with a fluid heating device that is in contact with a cooling fluid and configured to heat the cooling fluid, where the appliance use the cooling fluid for a cleaning process. DE3214216 discloses a heat pump that extracts the lost heat from the water vapour emerging from a dishwasher and transmits it, via three condensers connected in series, to three different heat consumers.

WO2005070274 discloses a continuous dishwasher comprising at least one washing region, at least one clear rinsing region and a device for recovering heat by suction. Said dishwasher also comprises a drying region and openings for sucking air out of the dishwasher. The entire quantity of the outgoing air flow can be varied according to the operating state of the dishwasher by means of closing elements, by fully or partially closing or releasing the openings.

### Summary of the invention

The aim of the invention is to provide a dishwashing machine comprising a washing unit, a rinsing unit, and a heat pump circuit for heating water to be used in the washing unit and/or in the rinsing unit, in which heat recovery is increased and, in general, in which overall efficiency is improved.

Within this aim, it is an object of the present invention to provide a dishwashing machine comprising a common heat pump circuit that can be used in combination to different designs of the rest of the machine.

Another object of the present invention is to provide a dishwashing machine in which easiness and quickness of installation is improved.

A further object of the invention is to provide a dishwashing machine in which water for treating dishware is heated without the risk of being contaminated by a heat-transfer fluid (called also working fluid) used in the heat pump circuit.

According to the invention it is provided a dishwashing machine comprising a washing unit, a rinsing unit and a heat pump circuit in which a working fluid flows, wherein a washing chamber and a rinsing chamber are defined in the washing unit and in the rinsing unit, respectively, the heat pump circuit exchanging heat with a vapour flow from the rinsing unit and/or from the washing unit and further comprising a secondary heating circuit heating water in at least one of the washing unit and the rinsing unit for treating dishware in the dishwashing machine by means of a secondary fluid circulating in the secondary heating circuit, the secondary heating circuit comprising a secondary heat exchange unit thermally coupled with the heat pump circuit for heating the secondary fluid.

Advantageously the washing unit and the rinsing unit are connected in series, i.e. the outlet of the washing unit is connected to the inlet of the rinsing unit

Advantageously, the washing unit can comprise a single washing unit or a plurality of washing units connected in series (i.e. the inlet of a washing unit is connected to the outlet of another washing unit); similarly, the rinsing unit can comprise a single rinsing unit or a plurality of rinsing units connected in series (i.e. the inlet of a rinsing unit is connected to the outlet of another rinsing unit). In an advantageous embodiment in which a washing unit comprises a plurality of washing units connected in series, one or more of these washing units, in particular the firs one of the series, can have the function of pre-washing the dishware.

It is to be understood that in the dishwashing machine according to the invention the modularity can be improved since the two circuits, i.e. the heat pump circuit and the secondary heating circuit can be assembled and loaded with heat-transfer fluid (preferably CO₂ for the heat pump, and water for the secondary circuit) separately.

Preferably, the heat pump circuit and the secondary heating circuit are designed and configured such that, when the heat pump circuit is working at full performances, the secondary fluid has a temperature at least equal to a sanitization temperature of dishware, at least at a predetermined position along the secondary heating circuit located downstream the secondary heat exchange unit with reference to a circulation direction of the secondary fluid in the secondary heating circuit.

In the context of the present invention, the expression "working at full performances" means working in a substantially stable condition, after the transitory phases following the switching-on of the heat pump circuit have ended.

This allows heating the water at a temperature high enough for the treating of the dishware by means of the heat pump circuit only, without necessarily requiring further additional heating means.

Preferably, the secondary heating circuit is a closed circuit, the secondary fluid circulating in the secondary heating circuit at a pressure above the atmospheric pressure. Even more preferably, the secondary fluid circulates in the secondary heating circuit at a pressure above 2 bar.

In this manner the fluid in the secondary circuit can remain in the liquid phase also at high temperature, thus making it circulation easier.

According to a preferred embodiment, the secondary fluid comprises water, so that the secondary circuit can be easily filled or re-filled even after the installation of the dishwashing machine.

Even more preferably, the secondary fluid consists of water, thus avoiding the use of refrigerant fluid in the secondary circuit. In this manner any risk of pouring refrigerant in the reservoir and tanks collecting water for treating dishware is avoided even if the respective heat exchangers are located inside them.

Preferably, the working fluid of the heat pump circuit comprises CO₂ and even more preferably, this working fluid consists of CO₂, which is particularly suitable in order to reach the temperatures required for treating dishware.

According to a further aspect, the secondary heating circuit comprises a trailing heat exchange unit in which water provided by a main supply is heated by the secondary fluid. In this manner, heat can be further recovered, since the water to be used for treating dishware is pre-heated.

According to a preferred embodiment, the secondary heating circuit comprises a main heat exchange unit for heating water for treating dishware collected in a water reservoir; therefore the secondary heating circuit can be used to heat water in the reservoir, thus providing hot water suitable for treating dishware available when required.

Preferably, the dishwashing machine further comprises an auxiliary heat exchange unit, arranged along the secondary circuit downstream the main heat exchange unit, with reference to a circulation direction of the secondary fluid in the secondary heating circuit, said auxiliary heat exchange unit heating water in a wash tank collecting water for washing dishware in the washing unit.

In this manner the residual heat from the heat exchange that occurs in the main heat exchange unit can be used for heating or pre-heating water, thus enhancing the heat recovery in the dishwashing machine.

According to a preferred embodiment, the trailing heat exchange unit is arranged along the secondary circuit downstream the main heat exchange unit. Also in this case, the provision of the exchange unit downstream the main heat exchange unit allows to enhance the heat recovery.

Preferably, the trailing heat exchange unit is arranged, along the secondary circuit, downstream the auxiliary heat exchange unit, thus allowing an even further heat recovery.

Advantageously the trailing heat exchange unit helps to keep the temperature of the secondary heating circuit in a controlled temperature range, since it prevents overheating of the heat-transfer liquid in the secondary heating circuit by removing excess temperature by the incoming fresh water.

According to a preferred embodiment, the main heat exchange unit and the auxiliary heat exchange unit are located inside the water reservoir and the wash tank, respectively. This allows to heat water by means of heat exchange provided by the exchange units Preferably, the secondary heat exchange unit comprises a condenser of the heat pump circuit. In this manner efficiency of the circuit can be further improved.

According to a preferred embodiment, the heat pump circuit comprises a heat pump heat exchange unit, the dishwashing machine comprising a suction device mixing an air flow drawn from an environment in which the dishwashing machine is installed and the vapour flow exiting from the rinsing unit and/or from the washing unit, the suction device being fluidly connected to the heat pump heat exchange unit for heating a working fluid flowing in the heat pump circuit by a mixed flow of the air flow and the vapour flow.

According to this embodiment, vapour generated during washing or rinsing dishware is at least partially recovered before being emitted in the environment.

Furthermore, part of the air in the environment in which the dishwashing machine is installed can be drawn and directed to the heat pump heat exchange unit so that conditioning of the environment can be effectively achieved.

The use of a mixed flow of external air flow and vapour flow for heating the working fluid makes it possible to achieve the heat exchange at lower temperature, thus improving efficiency of the dishwashing machine.

According to another aspect of the invention, the heat pump heat exchange unit comprises an evaporator of the heat pump circuit. In this manner the circuit if formed in a simple and particular efficient way.

Preferably, the washing unit comprises an inlet opening through which dishware enters the washing unit and the rinsing unit comprises an outlet opening through which dishware exits from the rinsing unit, the suction device comprising a suction opening positioned upstream the inlet opening and/or downstream the outlet opening. Accordingly, vapour can be drawn from the suction device as it exits the washing and/or the rinsing units.

Preferably, the suction device comprises a connection duct providing the mixed flow to the heat pump heat exchange unit, the connection duct being positioned at least partially, more preferably completely, above the washing unit and/or the rinsing unit.

In this manner, the dishwashing machine can be realized in a particular compact design, while at the same time allowing a proper collection of the vapour exiting from the washing and/or rinsing units.

According to the invention, the dishwashing machine comprises a secondary heating circuit heating water for treating dishware in the dishwashing machine by means of a secondary fluid circulating in the secondary heating circuit, the secondary heating circuit comprising a secondary heat exchange unit thermally coupled with the heat pump circuit for heating the secondary fluid.

According to a further aspect, the present invention also relates to a method for operating a dishwashing machine including a washing unit, a rinsing unit, a heat pump circuit and a secondary heating circuit, wherein a washing chamber and a rinsing chamber are defined in the washing unit and in the rinsing unit, respectively, the heat pump circuit exchanging heat with a vapour flow from the rinsing unit and/or from the washing unit, the method comprising:
- heating a secondary fluid circulating in the secondary heating circuit by means of the heat pump circuit;
- heating water for treating dishware in the dishwashing machine by means of the secondary fluid heated by the heat pump circuit.

Also according to the method of the present invention, the modularity of the dishwashing machine can be improved since water for treating can be heated by a different circuit than the one used for the heat pump system. In this manner it is not required to use a pressurized circuit for heating water, or in any case, pressure in the secondary heating circuit can remain reasonably low.

Furthermore, for the same reasons, it is not required to use a refrigerant as secondary fluid (on the contrary, simple water can be used), thus making it possible to charge the secondary circuit (e.g. with water) even after installation of the dishwashing machine. Accordingly, this also improves the modularity of the machine according to the present embodiment. Preferably, the secondary fluid in the secondary heating circuit has a pressure higher than the atmospheric pressure. Even more preferably, the secondary fluid in the secondary heating circuit has a pressure higher than 2 bar.

In this way, the fluid in the secondary circuit can remain in the liquid phase also at high temperature, thus making it circulation easier.

According to a preferred embodiment, the water for treating dishware in the dishwashing machine is heated at a temperature suitable for sanitizing dishware. Preferably, the temperature suitable for sanitizing dishware is at least 70°C.

This allows heating the water at a temperature high enough for the treating of the dishware by means of the heat pump circuit only, without necessarily requiring further additional heating means.

Anyway the water for treating dishware in the dishwashing machine can be heated at higher or lower temperatures (e.g. 85°c, 75°C, 65°C).

According to a preferred embodiment, the secondary fluid comprises water, so that the secondary circuit can be easily filled or re-filled even after the installation of the dishwashing machine.

According to a further aspect, the working fluid of the heat pump circuit comprises CO₂, which is particularly suitable in order to reach the temperatures required for treating dishware.

Preferably, the method comprises heating water provided from a main supply by the secondary fluid. In this manner, heat can be further recovered since the water to be used for treating dishware is pre-heated.

According to a further aspect, the temperature of the secondary fluid is adjusted (or controlled) by exchanging heat with the water from a main supply. This allows to control the temperature of the secondary fluid in a simple manner.

Preferably, the method comprises:
- mixing an air flow from an environment in which the dishwashing machine is installed with the vapour flow exiting from the washing unit and/or the rinsing unit;
- heating a working fluid in the heat pump circuit by a mixed flow formed by the mixing of the air flow and the vapour flow.

In this manner, vapour generated during washing or rinsing dishware is at least partially recovered before being emitted in the environment.

Furthermore, part of the air in the environment in which the dishwashing machine is installed can be drawn and directed to the heat pump heat exchange unit so that conditioning of the environment can be effectively achieved.

Also the use of a mixed flow of external air flow and vapour flow for heating the working fluid makes it possible to achieve the heat exchange at lower temperature, thus improving efficiency of the dishwashing machine,.

Preferably, the vapour flow is collected outside the washing unit and/or the rinsing unit. Accordingly, vapour can be drawn from the suction device as it exits the washing and/or the rinsing units.

According to a preferred embodiment, the method comprises filling a water reservoir with the water heated by the mixed flow, the water reservoir collecting water for treating dishware in the dishwashing machine.

In this manner hot water required for treating dishware can be obtained by means of the mixed flow, thus reducing the amount of energy required.

### Brief description of the drawings

These and other features and advantages of the invention will be better apparent from the following description of some exemplary and non-limitative embodiments, to be read with reference to the attached drawings, wherein:
- Fig. 1 is a schematic side view of a dishwashing machine according to the present invention;
- Fig. 2 is a schematic illustration of the hydraulic circuits of the dishwashing machine of Fig. 1.

### Detailed description of the invention

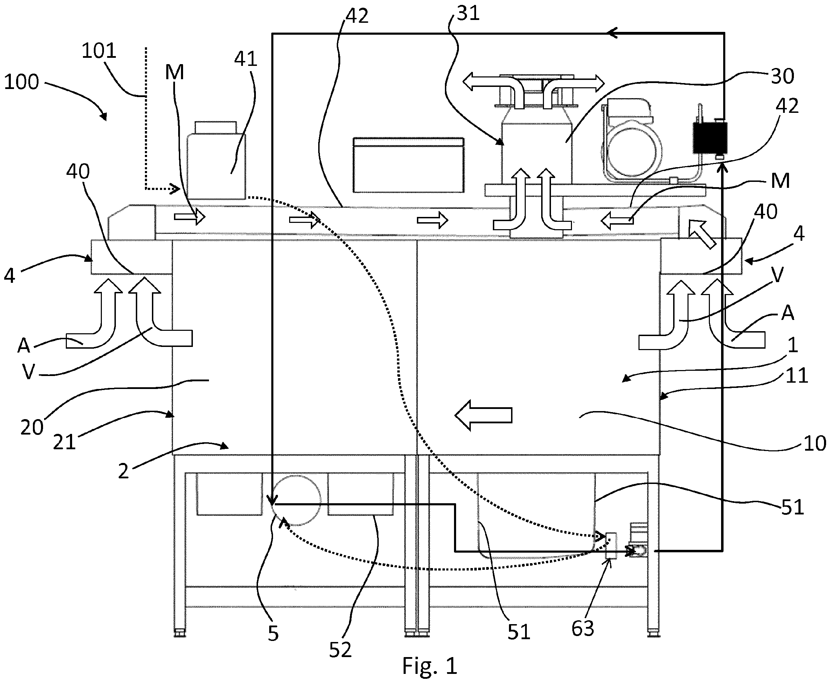

With reference initially to Fig. 1, a dishwashing machine according to the invention is generally designated with the reference number 100.

According to a preferred embodiment, the dishwashing machine 100 comprises at least a washing unit 1, into which dishware is washed, and at least a rinsing unit 2 into which dishware is rinsed after being washed; the rinsing unit 2 is connected in series with the washing unit 1, i.e. the (i.e. the outlet of the washing unit is connected to the inlet of the rinsing unit), so that the dishware exiting the washing unit 1 enters the rinsing unit 2.

Advantageously, the washing unit 1 can comprise a single washing unit 1 or a plurality of washing units connected in series (i.e. the inlet of a washing unit is connected to the outlet of another washing unit); similarly, the rinsing unit 2 can comprise a single rinsing unit 2 or a plurality of rinsing units connected in series (i.e. the inlet of a rinsing unit is connected to the outlet of another rinsing unit). It is underlined that in case of a washing unit comprising a plurality of washing units connected in series, one or more of these washing units, in particular the firs one of the series, can have the function of pre-washing the dishware.

It will be anyhow appreciated that also different processes could be performed in the dishwashing machine, such as a pre-washing phase, further successive rinsing or a drying phase.

Within the context of the present invention, all phases that occur for cleaning or sanitizing dishware in the dishwashing machine will be generally indicated as dishware treating. Preferably, the washing unit 1 and the rinsing unit 2 are formed as two separated units, inside which dishware is moved along a conveyor member, not shown in the drawings.

In one advantageous embodiment, a washing chamber 10 and a rinsing chamber 20 are defined in the washing unit 1 and in the rinsing unit 2, respectively.

Anyway, in a further advantageous embodiment, a plurality of rinsing chambers and/or a plurality of washing chambers can be defined respectively in the washing unit 1 and in the rinsing unit 2.

According to a preferred embodiment, the dishwashing machine 100 comprises a water reservoir 5 collecting water for dishware treatment. Preferably, water is provided by a main supply 101, e.g. connected to a water supply public system.

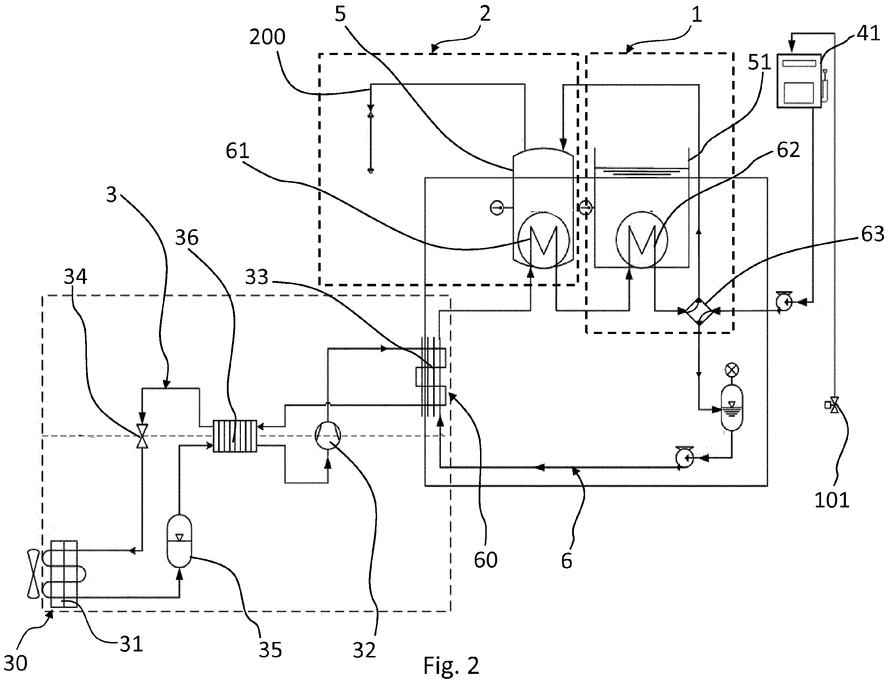

In one advantageous embodiment, the dishwashing machine 100 comprises an air gap 41, providing back-flow prevention of water provided by the main supply 101 in case of failures. Preferably, the washing unit 1 and the rinsing unit 2 comprises a wash tank 51 (in Fig. 2 it is illustrated only the wash tank 51 of the washing unit 1) collecting water for washing dishware, and a rinse tank 52 (illustrated only in Fig. 1) collecting water for the rinsing, respectively. According to a preferred embodiment, water for treating dishware is heated and collected in the water reservoir 5, and then it is poured, e.g. by a pouring line 200 in the wash tank 51 and/or the rinse tank 52.

In advantageous alternative embodiments, water can be heated both in the water reservoir 5 and in the wash tank 51 and/or the rinse tank 52. In further advantageous alternatives, water to be used for rinsing dishware is collected in the water reservoir 5.

According to a preferred embodiment, as dishware is moved along the conveyor member, nozzles, not show in the drawings, sprays water collected in wash tank 51 and/or in the rinse tank 52 towards the dishware.

Preferably, the dishwashing machine 100 comprises a heat pump circuit 3 for heating water to be used in the washing unit 1 and/or in the rinsing unit 2.

According to a preferred embodiment, the heat pump circuit 3 comprises an evaporator 31, a compressor 32, a condenser 33, and a throttling member 34.

In this manner, a working fluid of the heat pump circuit 3 can be subjected to a heat pump cycle by means of which heat can be provided by means of the condenser 33. Preferably, the working fluid comprises CO₂.

In one advantageous embodiment, the heat pump circuit 3 further comprises an accumulator 35 for collecting possible excess working fluid present in the heat pump circuit 3. Preferably, the heat pump circuit 3 comprises a regeneration exchanger 36 through which working fluid from a high pressure branch of the heat pump circuit 3 exchanges heat with working fluid from a low pressure branch thereof.

With reference now also to figure 2, according to a preferred embodiment, the dishwashing machine 100 comprises a secondary heating circuit 6 heating water for treating dishware in the dishwashing machine 100 by means of a secondary fluid.

Preferably, the secondary heating circuit 6 comprises a secondary heat exchange unit 60 thermally coupled with the heat pump circuit 3 for heating the secondary fluid.

Accordingly, the secondary fluid circulating in the secondary heating circuit 6 can be heated by means of the heat pump circuit 3, and the water for treating dishware in the dishwashing machine 100 can be heated by means of the secondary fluid heated by the heat pump circuit 3.

In one advantageous embodiment, the secondary heat exchange unit 60 is defined by the condenser 33 of the heat pump circuit 3.

According to a preferred embodiment, the secondary heating circuit 6 comprises a main heat exchange unit 61 heating water for treating dishware collected in the water reservoir 5. Preferably, the main heat exchange unit 61 is located downstream the secondary heat exchange unit 60 with reference to a circulation direction of the secondary fluid in the secondary heating circuit 6.

In one advantageous embodiment, the main heat exchange unit 61 is located inside the water reservoir 5.

According to a preferred embodiment, the secondary heating circuit 6 further comprises an auxiliary heat exchange unit 62 arranged along the secondary circuit 6 downstream the main heat exchange unit 61 with reference to a circulation direction of the secondary fluid in the secondary heating circuit 6 and heating water in the wash tank 51 collecting water for washing dishware in the washing unit 1. Preferably, the auxiliary heat exchange unit 62 is located inside the wash tank 51.

In a further advantageous embodiment, not illustrated, the secondary heating circuit 6 can comprises a further auxiliary heat exchange unit arranged along the secondary circuit 6 downstream the main heat exchange unit 61 with reference to a circulation direction of the secondary fluid in the secondary heating circuit 6, and heating water in the rinse tank 52 collecting water for rinsing.

In one advantageous embodiment, the secondary heating circuit 6 comprises a trailing heat exchange unit 63 in which water provided by the main supply 101 is heated by the secondary fluid. Preferably, the trailing heat exchange unit 63 is arranged along the secondary circuit 6 downstream the main heat exchange unit 61. In figure 2, the direction of the liquid fluxes within the trailing heat exchange unit 63 are schematically indicated by curved arrows.

In one advantageous embodiment, in which the secondary heating circuit 6 comprises the auxiliary heat exchange unit 62, the trailing heat exchange unit 63 is preferably arranged, along the secondary circuit 6, downstream the auxiliary heat exchange unit 62.

It should be noted that heat is exchanged first with water in the water reservoir 5, then, in case auxiliary heat exchange unit 62 is advantageously provided, with water in the wash tank 51 (and, in case a further auxiliary heat exchange unit is advantageously provided in the rinse tank 52, also with water in the rinse tank 52), and finally with water from the main supply 101. It will be therefore appreciated that in this manner water in the reservoir 5 can be heated at the highest temperature available and thus used for rinsing dishware. Nevertheless, the temperature of the secondary fluid is still high enough to heat - or at least pre-heat - water to be used for washing dishware, e.g. water collected in the wash tank 51. Therefore, according to a preferred embodiment, water provided from a main supply 101 is heated by the secondary fluid.

Also, since water from the main supply 101 is normally provided by the public water supply network, the secondary fluid can still be warm enough downstream the auxiliary heat exchange unit 62 for pre-heating water from the main supply 101 before filling the water reservoir 5.

It will be also appreciated that since water from public water supply network is normally at ambient temperature, a flow rate of water from the main supply 101 can be used for adjusting the temperature of the secondary fluid by exchanging heat therewith.

According to a preferred embodiment, the heat pump circuit 3 and the secondary heating circuit 6 are designed and configured such that, when the heat pump circuit 3 is working at full performances, the secondary fluid has a temperature at least equal to a sanitization temperature of dishware.

In the context of the present invention, the expression "working at full performances" means working in a substantially stable condition, after the transitory phases following the switching-on of the heat pump circuit have ended. Preferably, when the heat pump circuit is working at full performances rinsing water has a temperature of at least 70°C, while washing water has a temperature of at least 45°C. It will be also appreciated that in the context of the present invention, the term sanitization does not necessary require temperatures above 100°C, but merely implies that dishware are suitable for being use again, since in practice all the possible dangerous bacteria have been killed by high temperature.

Therefore, according to a preferred embodiment, the temperature suitable for sanitizing dishware is at least 70°C, since this is the temperature which guarantees killing in practice all the possible dangerous bacteria. Anyway, also higher temperatures can be chosen (e.g. 85°C).

It will be also appreciated that preferably the sanitization temperature is provided at least at a predetermined position along the secondary heating circuit 6 located downstream the secondary heat exchange unit 60 with reference to a circulation direction of the secondary fluid in the secondary heating circuit 6.

In this manner it is possible to achieve water in the reservoir 5 at a temperature suitable for sanitizing dishware, since the main heat exchange unit 61 is preferably also located downstream the secondary heat exchange unit 60. Therefore, according to a preferred embodiment, the water for treating dishware in the dishwashing machine 100 is heated at a temperature suitable for sanitizing dishware.

It should also be noted that in order to design and configure the heat pump circuit 3 and the secondary heating circuit 6 as required for the present embodiment - i.e. such that, when the heat pump circuit 3 is working at full performances, the secondary fluid has a temperature at least equal to a sanitization temperature of dishware - the components of the such circuits can be suitably dimensioned and/or the features of the working fluid and the secondary fluid can be selected properly.

To this regard, as previously explained, a particularly suitable working fluid for the heat pump circuit is CO₂.

In a preferred embodiment, the secondary fluid comprises water or even it may consist of water.

Preferably, the secondary heating circuit 6 is a closed circuit, the secondary fluid circulating in the secondary heating circuit 6 at a pressure above the atmospheric pressure.

According to a preferred embodiment, the pressure is above 2 bar, thus making it possible to use also the water provided by the water supply network in order to fill the circuit.

With reference again to figure 1, according to a preferred embodiment, the dishwashing machine comprises a suction device 4 (preferably two suction devices 4) mixing an air flow A drawn from an environment in which the dishwashing machine 100 is installed and a vapour flow V exiting from the rinsing unit 2 and/or from the washing unit 1.

The vapour flow V is produced during operation of the dishwashing machine 100, either during washing dishware or during rinsing it.

Therefore, according to a preferred embodiment, the air flow A from the environment is mixed with a vapour flow V exiting from the washing unit 1 and/or the rinsing unit 2. Accordingly, the flow of working fluid in the heat pump circuit 3 can be heated by the mixed flow M formed by the mixing the air flow A and the vapour flow V; therefore, in one advantageous embodiment, the water in water reservoir 5 is heated by effect of the mixed flow M.

Preferably, the washing unit 1 comprises an inlet opening 11 through which dishware enters the washing unit 1 and, according to a preferred embodiment, the rinsing unit 2 comprising an outlet opening 21 through which dishware exits from the rinsing unit 2.

In one advantageous embodiment, inlet opening 11 and outlet opening 21 are not sealed and vapour flow V produced during washing or rinsing may exit from the rinsing unit 2 and from the washing unit 1.

Preferably, a suction device 4 comprises a suction opening 40 positioned upstream the inlet opening 11 and/or downstream the outlet opening 21.

In other words, the vapour flow V is preferably collected outside the washing unit 1 and/or the rinsing unit 2.

In the advantageous embodiment of Figure 1, two suction devices 4 are provided, one in correspondence to the inlet opening 11, and the other in correspondence of the outlet opening 21; therefore one suction device 4 mixes the vapour flow V exiting from the rinsing unit 2 with an air flow A drawn from an environment in which the dishwashing machine 100 is installed, and the other suction device 4 mixes the vapour flow V exiting from the washing unit 1 with an air flow A drawn from an environment in which the dishwashing machine 100 is installed.

In one advantageous embodiment, the suction device 4 (preferably both, is two suction devices are provided) is connected to a heat pump heat exchange unit 30 of the heat pump circuit 3 for heating a working fluid flowing in the heat pump circuit 3 by a mixed flow M of the air flow A and the vapour flow V.

According to an advantageous aspect of the invention, the heat pump heat exchange unit 30 comprises the evaporator 31 of the heat pump circuit 3.

As shown in figure 1, according to a preferred embodiment, the suction device 4 (preferably both suction devices 4) comprises a connection duct 42 providing the mixed flow M to the heat pump heat exchange unit 30. Preferably, the connection duct 42 is positioned at least partially, preferably completely, above the washing unit 1 and/or the rinsing unit 2. According to a preferred embodiment, also the suction opening/s 40 is/are provided on upper portion of the dishwashing machine 100, basically forming a plenum chamber together with the connection duct 42.

It will be also appreciated that in order to further improve the compactness of the dishwashing machine 100, the heat exchange unit 30 and, optionally, the whole heat pump circuit 3, can be positioned at least partially, preferably completely, above the washing unit 1 and/or the rinsing unit 2.

## Claims

1. Dishwashing machine (100) comprising a washing unit (1), a rinsing unit (2) and a heat pump circuit (3) in which a working fluid flows, wherein a washing chamber (10) and a rinsing chamber (20) are defined in said washing unit (1) and in said rinsing unit (2), respectively, said heat pump circuit (3) exchanging heat with a vapour flow (V) from said rinsing unit (2) and/or from said washing unit (1), wherein said dishwashing machine (100) further comprises a secondary heating circuit (6) heating water in at least one of the washing unit (1) and the rinsing unit (2) for treating dishware in said dishwashing machine (100) by means of a secondary fluid circulating in said secondary heating circuit (6), said secondary heating circuit (6) comprising a secondary heat exchange unit (60) thermally coupled with said heat pump circuit (3) for heating said secondary fluid.

2. Dishwashing machine (100) according to claim 1, wherein said heat pump circuit (3) and said secondary heating circuit (6) are designed and configured such that, when said heat pump circuit (3) is working at full performances, said secondary fluid is heated by said secondary heat exchange unit (60) at least at a sanitization temperature of dishware.

3. Dishwashing machine (100) according to claim 1 or 2, wherein said secondary heating circuit (6) is a closed circuit, said secondary fluid circulating in said secondary heating circuit (6) at a pressure above the atmospheric pressure.

4. Dishwashing machine (100) according to any of the preceding claims, wherein said secondary fluid comprises water.

5. Dishwashing machine (100) according to any of the preceding claims, wherein said secondary heating circuit (6) comprises a trailing heat exchange unit (63) in which water provided by a main supply (101) is heated by said secondary fluid.

6. Dishwashing machine (100) according to any of the preceding claims, wherein said heat pump circuit (3) comprises a heat pump heat exchange unit (30), said dishwashing machine (100) further comprising a suction device (4) mixing an air flow (A) drawn from an environment in which said dishwashing machine (100) is installed and said vapour flow (V) exiting from said rinsing unit (2) and/or from said washing unit (1), said suction device (4) being fluidly connected to said heat pump heat exchange unit (30) for heating a working fluid flowing in said heat pump circuit (3) by a mixed flow (M) of said air flow (A) and said vapour flow (V).

7. Dishwashing machine (100) according to claim 6, wherein said heat pump heat exchange unit (30) comprises an evaporator (31) of said heat pump circuit (3).

8. Dishwashing machine (100) according to claim 6 or 7, wherein said washing unit (1) comprises an inlet opening (11) through which dishware enters said washing unit (1) and said rinsing unit (2) comprising an outlet opening (21) through which dishware exits from said rinsing unit (2), said suction device (4) comprising a suction opening (40) positioned upstream said inlet opening (11) and/or downstream said outlet opening (21).

9. Method for operating a dishwashing machine (100) according to any one of claims 1-8, said method comprising:
- heating a secondary fluid circulating in said secondary heating circuit (6) by means of said heat pump circuit (3);
- heating water for treating dishware in said dishwashing machine (100) by means of said secondary fluid heated by said heat pump circuit (3).

10. Method for operating a dishwashing machine (100) according to claim 9, wherein said secondary fluid flows in said secondary heating circuit (6) at a pressure higher than the atmospheric pressure.

11. Method for operating a dishwashing machine (100) according to claim 9 or 10, wherein said water for treating dishware in said dishwashing machine (100) is heated at a temperature suitable for sanitizing dishware.

12. Method for operating a dishwashing machine (100) according to any of claims 9 to 11, wherein said secondary fluid comprises water.

13. Method for operating a dishwashing machine (100) according to any of claims 9 to 12, further comprising heating water provided from a main supply (101) by said secondary fluid.

14. Method for operating a dishwashing machine (100) according to claim 13, wherein the temperature of said secondary fluid is adjusted by exchanging heat with said water from a main supply (101).

15. Method for operating a dishwashing machine (100) according to any of claims 9 to 14, further comprising:
- mixing an air flow (A) from an environment in which the dishwashing machine (100) is installed with said vapour flow (V) exiting from said washing unit (1) and/or said rinsing unit (2);
- heating a flow of working fluid in said heat pump circuit (3) by a mixed flow (M) formed by said mixing said air flow (A) and said vapour flow (V).

## Patentansprüche

1. Geschirrspülmaschine (100), umfassend eine Wascheinheit (1), eine Spüleinheit (2) und einen Wärmepumpenkreislauf (3), in dem ein Arbeitsfluid fließt, wobei eine Waschkammer (10) und eine Spülkammer (20) in der Wascheinheit (1) beziehungsweise in der Spüleinheit (2) definiert sind, wobei der Wärmepumpenkreislauf (3) Wärme mit einem Dampfstrom (V) aus der Spüleinheit (2) und/oder aus der Wascheinheit (1) austauscht, wobei die Geschirrspülmaschine (100) ferner einen sekundären Heizkreislauf (6) umfasst, der Wasser in der Wascheinheit (1) und/oder der Spüleinheit (2) erwärmt, um Geschirr in der Geschirrspülmaschine (100) mittels eines sekundären Fluids zu behandeln, das in dem sekundären Heizkreislauf (6) zirkuliert, wobei der sekundäre Heizkreislauf (6) eine sekundäre Wärmetauschereinheit (60) umfasst, die thermisch mit dem Wärmepumpenkreislauf (3) gekoppelt ist, um das sekundäre Fluid zu erwärmen.

2. Geschirrspülmaschine (100) nach Anspruch 1, wobei der Wärmepumpenkreislauf (3) und der sekundäre Heizkreislauf (6) so ausgelegt und konfiguriert sind, dass, wenn der Wärmepumpenkreislauf (3) mit voller Leistung arbeitet, das sekundäre Fluid durch die sekundäre Wärmetauschereinheit (60) mindestens auf eine Desinfektionsstemperatur des Geschirrs erhitzt wird.

3. Geschirrspülmaschine (100) nach Anspruch 1 oder 2, wobei der sekundäre Heizkreislauf (6) ein geschlossener Kreislauf ist, wobei das sekundäre Fluid in dem sekundären Heizkreislauf (6) bei einem Druck oberhalb des Atmosphärendrucks zirkuliert.

4. Geschirrspülmaschine (100) nach einem der vorhergehenden Ansprüche, wobei das sekundäre Fluid Wasser umfasst.

5. Geschirrspülmaschine (100) nach einem der vorhergehenden Ansprüche, wobei der sekundäre Heizkreislauf (6) eine nachgeschaltete Wärmetauschereinheit (63) umfasst, in der von einer Hauptversorgung (101) bereitgestelltes Wasser durch das sekundäre Fluid erwärmt wird.

6. Geschirrspülmaschine (100) nach einem der vorhergehenden Ansprüche, wobei der Wärmepumpenkreislauf (3) eine Wärmepumpen-Wärmetauschereinheit (30) umfasst, wobei die Geschirrspülmaschine (100) ferner eine Ansaugvorrichtung (4) umfasst, die einen Luftstrom (A), der aus einer Umgebung angesaugt wird, in der die Geschirrspülmaschine (100) installiert ist, und den Dampfstrom (V), der aus der Spüleinheit (2) und/oder aus der Wascheinheit (1) austritt, mischt, wobei die Ansaugvorrichtung (4) mit der Wärmepumpen-Wärmetauschereinheit (30) fluidverbunden ist, um ein in dem Wärmepumpenkreislauf (3) strömendes Arbeitsfluid durch einen gemischten Strom (M) aus dem Luftstrom (A) und dem Dampfstrom (V) zu erwärmen.

7. Geschirrspülmaschine (100) nach Anspruch 6, wobei die Wärmepumpen-Wärmetauschereinheit (30) einen Verdampfer (31) des Wärmepumpenkreislaufs (3) umfasst.

8. Geschirrspülmaschine (100) nach Anspruch 6 oder 7, wobei die Wascheinheit (1) eine Einlassöffnung (11) umfasst, durch die Geschirr in die Wascheinheit (1) eintritt, und die Spüleinheit (2) eine Auslassöffnung (21) umfasst, durch die Geschirr aus der Spüleinheit (2) austritt, wobei die Saugvorrichtung (4) eine Saugöffnung (40) umfasst, die der Einlassöffnung (11) vorgeschaltet und/oder der Auslassöffnung (21) nachgeschaltet angeordnet ist.

9. Verfahren zum Betreiben einer Geschirrspülmaschine (100) nach einem der Ansprüche 1 - 8, das Verfahren umfassend:
- Erwärmen eines im sekundären Heizkreislauf (6) zirkulierenden sekundären Fluids mittels des Wärmepumpenkreislaufs (3);
- Erwärmen des Wassers zum Behandeln des Geschirrs in der Geschirrspülmaschine (100) mit Hilfe des durch den Wärmepumpenkreislauf (3) erwärmten sekundären Fluids.

10. Verfahren zum Betreiben einer Geschirrspülmaschine (100) nach Anspruch 9, wobei das sekundäre Fluid in dem sekundären Heizkreislauf (6) mit einem höheren Druck als dem Atmosphärendruck strömt.

11. Verfahren zum Betreiben einer Geschirrspülmaschine (100) nach Anspruch 9 oder 10, wobei das Wasser zum Behandeln des Geschirrs in der Geschirrspülmaschine (100) auf eine für das Desinfizieren des Geschirrs geeignete Temperatur erhitzt wird.

12. Verfahren zum Betreiben einer Geschirrspülmaschine (100) nach einem der Ansprüche 9 bis 11, wobei das sekundäre Fluid Wasser umfasst.

13. Verfahren zum Betreiben einer Geschirrspülmaschine (100) nach einem der Ansprüche 9 bis 12, ferner umfassend das Erhitzen von Wasser, das von einer Hauptversorgung (101) durch das sekundäre Fluid bereitgestellt wird.

14. Verfahren zum Betreiben einer Geschirrspülmaschine (100) nach Anspruch 13, wobei die Temperatur des sekundären Fluids durch Wärmeaustausch mit dem Wasser aus einer Hauptversorgung (101) eingestellt wird.

15. Verfahren zum Betreiben einer Geschirrspülmaschine (100) nach einem der Ansprüche 9 bis 14, ferner umfassend:
- Mischen eines Luftstroms (A) aus einer Umgebung, in der die Geschirrspülmaschine (100) installiert ist, mit dem Dampfstrom (V), der aus der Wascheinheit (1) und/oder der Spüleinheit (2) austritt;
- Erwärmen eines Stroms von Arbeitsfluid in dem Wärmepumpenkreislauf (3) durch einen gemischten Strom (M), der durch das Mischen des Luftstroms (A) und des Dampfstroms (V) gebildet wird.

## Revendications

1. Lave-vaisselle (100) comprenant une unité de lavage (1), une unité de rinçage (2) et un circuit de pompe à chaleur (3) dans lequel circule un fluide de travail, dans lequel une chambre de lavage (10) et une chambre de rinçage (20) sont définies dans ladite unité de lavage (1) et dans ladite unité de rinçage (2), respectivement, ledit circuit de pompe à chaleur (3) échangeant de la chaleur avec un flux de vapeur (V) issu de ladite unité de rinçage (2) et/ou de ladite unité de lavage (1), dans lequel ledit lave-vaisselle (100) comprend en outre un circuit de chauffage secondaire (6) chauffant l'eau dans au moins l'une parmi l'unité de lavage (1) et l'unité de rinçage (2) pour traiter la vaisselle dans ledit lave-vaisselle (100) au moyen d'un fluide secondaire circulant dans ledit circuit de chauffage secondaire (6), ledit circuit de chauffage secondaire (6) comprenant une unité d'échange de chaleur secondaire (60) couplée thermiquement audit circuit de pompe à chaleur (3) pour chauffer ledit fluide secondaire

2. Lave-vaisselle (100) selon la revendication 1, dans lequel ledit circuit de pompe à chaleur (3) et ledit circuit de chauffage secondaire (6) sont conçus et configurés de sorte que, lorsque ledit circuit de pompe à chaleur (3) fonctionne à plein rendement, ledit fluide secondaire soit chauffé par ladite unité d'échange de chaleur secondaire (60) au moins à une température de désinfection de vaisselle.

3. Lave-vaisselle (100) selon la revendication 1 ou 2, dans lequel ledit circuit de chauffage secondaire (6) est un circuit fermé, ledit fluide secondaire circulant dans ledit circuit de chauffage secondaire (6) à une pression supérieure à la pression atmosphérique.

4. Lave-vaisselle (100) selon une quelconque des revendications précédentes, dans lequel ledit fluide secondaire comprend de l'eau.

5. Lave-vaisselle (100) selon une quelconque des revendications précédentes, dans lequel ledit circuit de chauffage secondaire (6) comprend une unité d'échange de chaleur traînante (63) dans laquelle l'eau fournie par une alimentation principale (101) est chauffée par ledit fluide secondaire.

6. Lave-vaisselle (100) selon une quelconque des revendications précédentes, dans lequel ledit circuit de pompe à chaleur (3) comprend une unité d'échange thermique de pompe à chaleur (30), ledit lave-vaisselle (100) comprenant en outre un dispositif d'aspiration (4) mélangeant un flux d'air (A) prélevé d'un environnement dans lequel ledit lave-vaisselle (100) est installé et ledit flux de vapeur (V) sortant de ladite unité de rinçage (2) et/ou de ladite unité de lavage (1), ledit dispositif d'aspiration (4) étant en communication fluidique avec ladite unité d'échange de chaleur de pompe à chaleur (30) pour chauffer un fluide de travail s'écoulant dans ledit circuit de pompe à chaleur (3) par un flux mixte (M) dudit flux d'air (A) et dudit flux de vapeur (V).

7. Lave-vaisselle (100) selon la revendication 6, dans lequel ladite unité d'échange thermique de pompe à chaleur (30) comprend un évaporateur (31) dudit circuit de pompe à chaleur (3).

8. Lave-vaisselle (100) selon la revendication 6 ou 7, dans lequel ladite unité de lavage (1) comprend une ouverture d'entrée (11) par laquelle la vaisselle entre dans ladite unité de lavage (1) et ladite unité de rinçage (2) comprenant une ouverture de sortie (21) par laquelle la vaisselle sort de ladite unité de rinçage (2), ledit dispositif d'aspiration (4) comprenant une ouverture d'aspiration (40) positionnée en amont de ladite ouverture d'entrée (11) et/ou en aval de ladite ouverture de sortie (21).

9. Procédé de fonctionnement d'un lave-vaisselle (100) selon une quelconque des revendications 1 à 8, ledit procédé comprenant de :
- chauffer un fluide secondaire circulant dans ledit circuit de chauffage secondaire (6) au moyen dudit circuit de pompe à chaleur (3) ;
- chauffer de l'eau pour traiter la vaisselle dans ledit lave-vaisselle (100) au moyen dudit fluide secondaire chauffé par ledit circuit de pompe à chaleur (3).

10. Procédé de fonctionnement d'un lave-vaisselle (100) selon la revendication 9, dans lequel ledit fluide secondaire circule dans ledit circuit de chauffage secondaire (6) à une pression supérieure à la pression atmosphérique.

11. Procédé de fonctionnement d'un lave-vaisselle (100) selon la revendication 9 ou 10, dans lequel ladite eau de traitement de la vaisselle dans ledit lave-vaisselle (100) est chauffée à une température adaptée à la désinfection de la vaisselle.

12. Procédé de fonctionnement d'un lave-vaisselle (100) selon une quelconque des revendications 9 à 11, dans lequel ledit fluide secondaire comprend de l'eau.

13. Procédé de fonctionnement d'un lave-vaisselle (100) selon une quelconque des revendications 9 à 12, comprenant en outre le chauffage de l'eau fournie à partir d'une alimentation principale (101) par ledit fluide secondaire.

14. Procédé de fonctionnement d'un lave-vaisselle (100) selon la revendication 13, dans lequel la température dudit fluide secondaire est ajustée en échangeant de la chaleur avec ladite eau provenant d'une alimentation principale (101).

15. Procédé de fonctionnement d'un lave-vaisselle (100) selon une quelconque des revendications 9 à 14, comprenant en outre de :
- mélanger un flux d'air (A) provenant d'un environnement dans lequel le lave-vaisselle (100) est installé avec ledit flux de vapeur (V) sortant de ladite unité de lavage (1) et/ou de ladite unité de rinçage (2) ;
- chauffer un flux de fluide de travail dans ledit circuit de pompe à chaleur (3) par un flux mixte (M) formé par ledit mélange dudit flux d'air (A) et dudit flux de vapeur (V).
